# EUROPÄISCHE PATENTANMELDUNG

(11) **EP 2 218 530 A1**
(43) Veröffentlichungstag der Anmeldung: **18.08.2010**
(21) Anmeldenummer: 10151557.5
(22) Anmeldetag: 10.10.2007
(51) Int. Cl.: B22F 3/105, F01D 5/02, B22F 5/00, B22F 5/04

(54) **Hochdruckturbinen-Rotor und Verfahren zur dessen Herstellung**

(30) Priorität: 18.10.2006 DE 102006049216
(62) Teilanmeldung aus: 07817645.0
(71) Anmelder: MTU Aero Engines GmbH, 80995 München (DE)
(72) Erfinder: Dusel, Karl-Heinz, 85716, Unterschleißheim (DE); Huttner, Roland, 82287, Jesenwang (DE); Ader, Christoph, 81925, München (DE); Schlothauer, Steffen, 85757, Karlsfeld (DE)

(57) **Zusammenfassung**

Die Erfindung betrifft ein Verfahren zur Herstellung eines Hochdruckturbinen-Rotors, wobei dieser Turbinenrotor als Blisk (d.h. bladed disk) gestaltet ist und eine radial innen angeordnete Scheibe sowie mehrere von dieser Scheibe abragende Schaufeln bzw. Schaufelblätter ausbildet, wobei der Turbinenrotor für eine Luftkühlung ein inneres Kanalsystem aufweist, und wobei zumindest ein Abschnitt dieses Turbinenrotors durch ein generatives Herstellungsverfahren erzeugt wird, sowie einen Turbinenrotor.

## Beschreibung

Die Erfindung betrifft ein Verfahren zur Herstellung eines als Blisk gestalteten Hochdruckturbinen-Rotors sowie einen solchen Hochdruckturbinen-Rotor.

Rotoren für Hochdruckturbinen von Flugtriebwerken werden bislang so hergestellt, dass in einen Rotorgrundkörper die Turbinenschaufeln einzeln eingesteckt werden. Die Turbinenschaufeln sind dabei mit komplexen inneren Kanälen für die Kühlung der Rotoren bzw. Schaufeln versehen. Die einzelnen, eingesteckten Schaufeln sind jeweils aus Feinguss hergestellt, wobei - insbesondere bei Hohlschaufeln - Wachslinge mit keramischen Kernen zum Einsatz kommen. Derartige beschaufelte Rotoren für Hochdruckturbinen der bekannte Art weisen eine Vielzahl von Einzelteilen auf und sind im Übrigen teuer in ihrer Herstellung.

Vor diesem Hintergrund liegt der Erfindung die Aufgabe zugrunde, eine Möglichkeit zur Herstellung eines Hochdruckturbinen-Rotors bzw. einen solchen Hochdruckturbinen-Rotor zu schaffen, der einfach und kostengünstig herstellbar ist.

Zur Lösung dieser Aufgabe wird ein Verfahren zur Herstellung eines Hochdruckturbinen-Rotors gemäß Anspruch 1 vorgeschlagen, sowie ein Hochdruckturbinen-Rotor gemäß Anspruch 8. Bevorzugte Weiterbildungen der Erfindung sind Gegenstand der Unteransprüche.

Der mittels des erfindunsgemäßen Verfahrens hergestellte Hochdruckturbinen-Rotor bzw. der erfindungsgemäße Hochdruckturbinen-Rotor weist also einen Rotorgrundkörper mit einer Vielzahl von daran angeformten Turbinenschaufeln auf. Die Turbinenschaufeln weisen ein Kanalsystem auf, das im Inneren dieser Turbinenschaufeln für die Temperierung derselben vorgesehen ist.

Zur Herstellung dieses Hochdruckturbinen-Rotors werden zumindest die Schaufeln desselben mittels eines generativen Herstellungsverfahrens aufgebaut. Dieses erfolgt insbesondere so, dass die Schaufeln schichtweise aufgebaut werden. Dieses kann so sein, dass geeignete sinterbare Pulver, die beispielsweise einen ausgeprägten Semi-solid-Zustand aufweisen, aufgebracht werden, und verfestigt werden in den Bereichen, in denen festes Material der Schaufel entstehen soll. Es kann dabei vorgesehen sein, dass im Bereich der jeweiligen Kanäle in den schichtweisen Querschnitten keine Verfestigung erfolgt, so dass anschließend das Pulver in diesen Bereichen zur Bildung der entsprechenden Kanäle ausgeblasen werden kann.

Der erfindungsgemäße Hochdruckturbinen-Rotor - Entsprechendes gilt jeweils in Bezug auf den mit dem erfindungsgemäßen Verfahren hergestellten Hochdruckturbinen-Rotor in vorteilhafter Ausgestaltung - ist insbesondere eine Blisk. Eine solche Blisk (bladed disk) ist insbesondere so, dass sie aus einer Scheibe und einer Mehrzahl von daran angeformten Schaufeln besteht, wobei die Scheibe und die Schaufeln einstückig verbunden sind. Es kann vorgesehen sein, dass die Auslegung der Rotoren in der Turbine als einstufige Blisk ausgebildet ist, oder als mehrstufige Blisk; dieses kann insbesondere analog zum Verdichter erfolgen. Es kann vorgesehen sein, dass die Schaufeln und das oder die Schaufelsegmente einzeln generativ hergestellt werden. Weiter kann vorgesehen sein, dass dieses bzw. der Aufbau der Schaufeln bzw. des oder der Schaufelsegmente in Endkontur erfolgt, oder mit Aufmass, um anschließend abtragend fertig bearbeitet zu werden. Es kann vorgesehen sein, dass die einzeln hergestellten Schaufeln mit den jeweiligen Scheibensegmenten bzw. der Scheibe mit einem geeigneten Fügeverfahren, wie z. B. Schweißen oder Löten, zu einer (Turbinen-)Blisk verbunden werden.

Es kann aber auch vorgesehen sein, dass die Scheibe mit den Schaufeln, also insbesondere sämtliche Teile der Blisk, die hier insbesondere eine Turbinenblisk ist, im generativen Herstellungsverfahren erzeugt werden. Es kann also mittels eines entsprechenden Pulvers sowohl die Scheibe einer (Turbinen-)Blisk als auch Schaufeln im generativen Herstellungsverfahren derart hergestellt sein, dass sich ein anschließendes Fügen bzw. Verbinden der Schaufeln mit der Scheibe - bzw. entsprechenden Segmenten - erübrigt bzw. entbehrlich wird.

Ungeachtet dessen kann aber auch vorgesehen sein, dass sowohl die Scheibe einer (Turbinen-)Blisk als auch die Schaufeln einer (Turbinen-)Blisk jeweils generativ erzeugt werden, und anschließend mit einem geeigneten Fügeverfahren, das beispielsweise der oben genannten Art sein kann, gefügt bzw. verbunden werden.

Die (Turbinen-)Blisk, bzw. der als (Turbinen-)Blisk gestaltete Hochdruckturbinen-Rotor kann beispielsweise mit frei stehenden Schaufeln ausgeführt sein bzw. werden; es kann aber auch vorgesehen sein, dass die Schaufeln bzw. Schaufelsegmente mit einem äußeren Deckband hergestellt bzw. verbunden sind bzw. werden und - insbesondere an diesen Stellen - ebenfalls gefügt werden. Dieses kann beispielsweise mit einem geeigneten Fügeverfahren, wie beispielsweise Schweißen oder Löten, erfolgen.

Gemäß einer besonders bevorzugten Ausgestaltung ist vorgesehen, dass die komplette (Turbinen-)Blisk, also insbesondere Scheibe und Schaufeln, generativ hergestellt werden. Es kann vorgesehen sein, dass innerhalb des Herstellungs- bzw. Bauprozesses unterschiedliche Werkstoffe verarbeitet werden bzw. die (Turbinen-)Blisk bzw. der Hochdruckturbinen-Rotor aus unterschiedlichen Werkstoffen aufgebaut ist bzw. besteht. Weiter kann vorgesehen sein, dass durch entsprechende Parametereinstellung und Prozessführung variable Werkstoffeigenschaften erzeugt werden. Dieses kann insbesondere so sein, dass die Werkstoffeigenschaften gradiert ausgebildet sind bzw. dass sie sich über dem Hochdruckturbinen-Rotor bzw. der (Turbinen-)Blisk verändern; dieses kann insbesondere auch so sein, dass sich die Werkstoffeigenschaften über einzelnen Schaufeln und/oder über der Scheibe der (Turbinen-)Blisk verändern, also von der räumlichen Position oder einer jeweils zweidimensionalen oder dreidimensionalen Position abhängig sind.

Beispielsweise kann vorgesehen sein, dass für die Schaufeln bzw. Schaufelblätter und die (Turbinen-)Blisk-Scheibe verschiedene Werkstoffe verwendet bzw. eingesetzt werden bzw. diese aus verschiedenen Werkstoffen sind.

Es kann auch vorgesehen sein, dass während des Bau- bzw. Herstellungsprozesses eine Spitzenpanzerung aufgebracht wird bzw. auf die Schaufelspitzen aufgebracht wird; das Aufbringen einer Spitzenpanzerung kann also insbesondere durch einen entsprechenden generativen Aufbau bzw. im Rahmen des generativen Aufbaus erfolgen.

Ferner kann vorgesehen sein, dass eine Beschichtung, insbesondere keramische Beschichtung, während bzw. im Rahmen des Bauprozesses bzw. Herstellungsprozesses der (Turbinen-)Blisk bzw. der Schaufel der Blisk bzw. der Schaufelblätter der Blisk aufgebracht wird. Eine solche Beschichtung, die wie angesprochen in vorteilhafter Ausgestaltung eine keramische Beschichtung ist, kann beispielsweise auf die Scheibe und/oder auf die Schaufeln bzw. Schaufelblätter aufgebracht werden, oder wird jeweils partiell aufgebracht. Eine solche keramische Beschichtung kann beispielsweise eine Korrosionsschutzschicht oder Hochtemperaturschutzschicht oder dergleichen sein. Es kann vorgesehen sein, dass eine solche Schicht - gegebenenfalls partiell oder vollständig - nur auf den Schaufelblättern bzw. den Schaufeln aufgebracht ist oder nur auf der Scheibe der (Turbinen-)Blisk aufgebracht ist oder sowohl auf der Scheibe als auch auf den Schaufeln bzw. Schaufelblättern der (Turbinen-)Blisk aufgebracht wird bzw. ist.

Wie bereits oben angesprochen kann vorgesehen sein, dass sowohl die Scheibe der (Turbinen-)Blisk als auch die Schaufeln der (Turbinen-)Blisk bzw. der Schaufelring generativ aufgebaut bzw. hergestellt ist.

Es kann aber auch vorgesehen sein, dass die Scheibe, die in der Regel hochbelastet ist, konventionell aus einem geschmiedeten Rohling hergestellt wird und der Schaufelring bzw. die Schaufeln bzw. die Schaufelsegmente generativ aufgebaut bzw. hergestellt sind bzw. werden. Es kann vorgesehen sein, dass der Aufbau des Schaufelrings bzw. der Schaufeln bzw. der Schaufelsegmente in Endkontur erfolgt oder mit Aufmass erfolgt, um anschließend abtragend und / oder spanend fertig bearbeitet zu werden.

Der Schaufelring bzw. die Schaufelsegmente bzw. die einzelnen hergestellten Schaufeln wird bzw. werden in vorteilhafter Ausgestaltung mit einem geeigneten Fügeverfahren, wie z. B. Schweißen oder Löten, mit der Scheibe verbunden.

Wie bereits angesprochen ist insbesondere vorgesehen, dass die Turbinen-Blisk bzw. der Hochdruckturbinen-Rotor, und insbesondere die Schaufeln bzw. Schaufelblätter dieses Turbinen-Blisks bzw. dieses Hochdruckturbinen-Rotors, mit einem inneren (Kühl-)kanalsystem für eine Luftdurchströmung zur Kühlung versehen sind. Dieses Kanalsystem wird dabei insbesondere generativ im Rahmen des Ausbaus der Schaufelblätter bzw. des Aufbaus der Blisk bzw. des Aufbaus der Scheibe bzw. des Scheibensegments erzeugt.

Es kann vorgesehen sein, dass der Aufbau der Schaufeln generativ direkt auf einen fertig- bzw. vorbearbeiteten Raum erfolgt. Der Aufbau der Schaufeln kann in Endkontur erfolgen oder mit Aufmass, um anschließend abtragend und / oder spanend fertig bearbeitet zu werden. Es kann auch vorgesehen sein, dass die Scheibe der Blisk integrierte Radialverdichterstrukturen aufweist. Insbesondere durch in die Scheibe integrierte Radialverdichterstrukturen ist eine zusätzliche Verstärkung und Erhöhung der Luftdurchströmung möglich, was für eine effektivere Kühlung genutzt werden kann.

Durch den schichtweisen Aufbauprozess besteht beispielsweise die Möglichkeit, Hohlstrukturen (z. B. zur Temperierung) oder belastungsgerechte innere Strukturen mit einzubringen. Die komplexen inneren Kanäle müssen nicht durch Abformprozesse hergestellt werden, sondern werden bei generativem schichtweisen Aufbau freigelassen bzw. werden mit aufgebaut. Bei Verfahren mit Materialzuführung bleiben die Kanäle gemäß CAD-Modell frei, beim Aufbau im Pulverbett wird das Pulver an der Stelle der Kanäle nicht verfestigt und wird anschließend ausgeblasen.

Wie vorstehend angedeutet ist es also besonders bevorzugt, dass mittels eines CAD-Modells der herzustellenden Blisk bzw. des herzustellenden Turbinenrotors bzw. der herzustellenden Schaufeln oder der herzustellenden Scheibe der Blisk das jeweils betreffende, vorgenannte Teil hergestellt wird, und zwar insbesondere unter Berücksichtigung von einem Kanalsystem, das im Rahmen dieser Herstellung im Inneren des jeweils betreffenden Bauteils erzeugt werden soll.

Es kann vorgesehen sein, dass - beispielsweise mittels eines Lasers oder einer anderen Strahlungs- und / oder Lichtquelle - aus dem Pulverbett der Bereich, in dem festes Material im Rahmen der Herstellung gezeugt werden soll, entsprechend bestrahlt wird, und der Bereich, in dem Kanäle entstehen sollen, entsprechend nicht bestrahlt bzw. ausgehärtet wird. Dabei kann vorgesehen sein, dass nach Fertigstellung der zu erhärtenden Abschnitte das Pulver, das in den ausgebildeten Kanälen verblieben ist, ausgeblasen wird.

In vorteilhafter Ausgestaltung erfolgt der Aufbau der Strukturen also schichtweise ausgehend von CAD-Daten. Hierfür können beispielsweise alle sogenannten Rapid-Prototyping-Verfahren, mit denen metallische Bauteile aufgebaut werden können, verwendet werden. Der Aufbau kann beispielsweise durch sinterbare Pulver mittels einer Strahlquelle in natürlicher oder künstlicher Umgebung (z. B. Atmosphäre, Schutzgas, Vakuum) erfolgen.

Beispielsweise können als Verfahren für die Herstellung die folgenden Verfahren verwendet werden: Laser Engineered Net Schaping (LENS; z. B. Fa. Optomec, www.optomec.com) und/oder Electrobeam Melting (z. B. Firma Arcam, www.arcam.de) und/oder Direct Laser Metal Sintering (z. B. Firma EOS, www.eos-gmbh.de) und/oder Selective Laser Melting (z. B. Fraunhofer ILT, Fa. Trumpf, www.fraunhofer.de) und/oder Laserformen (z. B. Truma-Form, Fa. Trumpf, www. Trumpf.com) und / oder Laserauftragsschweißen (z. B. Fa. Trumpf).

Durch den Einsatz generativer Fertigungstechnologien ist es möglich, weitgehend beliebig definierte dreidimensionale Strukturen generativ aufzubauen. Generative Herstellungsverfahren können grundsätzlich auf alle im Triebwerksbau eingesetzten metallischen Werkstoffe angewendet werden (z. B. Titan- und/oder Nickellegierungen). Geeignet sind beispielsweise sinterbare Pulver, die einen ausgeprägten Semi-Solid-Zustand aufweisen.

Es können insbesondere komplexe innere Kanäle, wie sie für die Kühlung von Rotoren z. B. in der Hochruckturbine benötigt werden, durch eine vollständig generative Herstellung der Rotoren realisiert werden, bzw. wird dieses in vorteilhafter Ausgestaltung der Erfindung vorgenommen.

Es lassen sich insbesondere in vorteilhafter Ausgestaltung Strukturen mit inneren Fachwerken sowie geschlossener Außenhaut herstellen. Da die Geometrie direkt ausgehend von den CAD-Daten in vorteilhafter Ausgestaltung aufgebaut wird, besteht hier eine beinahe uneingeschränkte Gestaltungsfreiheit.

Die Anwendung kann beispielsweise auf Gehäusestrukturen in der Triebwerktechnik abzielen, die konstruktiv so zu gestalten sind, dass die Innenstruktur je nach Anforderung strukturmechanisch möglichst gut bzw. optimal ausgelegt ist (z. B. steif, dämpfend), was beispielsweise geringstmögliches Gewicht bedeuten kann.

Die Gestaltungsfreiheit kann beispielsweise zudem benutzt werden, um die vorhandenen Hohlstrukturen mit Gas oder Flüssigkeit zu durchströmen, so dass dadurch eine Temperierung oder Geräuschdämmung erzielt werden kann.

Es ist insbesondere vorgesehen, dass metallische Körper bzw. eine (Turbinen-) Blisk schichtweise direkt aus einen CAD-Modell aufgebaut wird. Das Verfahren ist insbesondere geeignet für jeden schmelzbaren Werkstoff, und zwar insbesondere metallischen Werkstoff. In bevorzugter Ausgestaltung wird als Werkstoff eine Nickel-Basis-Legierung oder eine Titanlegierung oder Edelstahl eingesetzt. In vorteilhafter Gestaltung sind die Scheibe und die Schaufeln der Turbinenblisk integral in einem Bauteil mit beliebig geformten Hohlräumen, insbesondere Kühlstrukturen.

Im Folgenden sollen einige Vorteile und beispielhafte Wirkungen erläutert werden, die zumindest bei vorteilhaften Weiterbildungen der Erfindung gegeben sein können bzw. gegeben sind. Anzumerken ist in diesem Zusammenhang allerdings, dass nicht zwangsläufig bei jeder erfindungsgemäßen Ausgestaltung sämtliche dieser Vorteile bzw. diese Vorteile gegeben sein müssen.

Beispielsweise kann eine Gewichtsreduzierung erreicht werden. Auch die Teilezahl lässt sich beispielsweise verringern. Ferner lassen sich Kosten und/oder die Emission reduzieren.

Ein weiterer Vorteil besteht darin, dass es durch die Erfindung erstmalig möglich geworden ist, für die Praxis bzw. die Serie geeignete Turbinen-Blisken zu schaffen.

Die Schaffung von Turbinen-Blisken wird seit geraumer Zeit von verschiedensten Herstellern angestrebt. Bislang ist es allerdings noch nicht gelungen, dieses in einer Art zu realisieren, die tatsächlich für die Praxis in geeigneter Weise sich bewährt und insbesondere für die Serienfertigung geeignet ist. Durch die vorliegende Erfindung wird nun erstmalig ermöglicht, Turbinen-Blisken zu schaffen, die ohne weiteres in der Praxis, beispielsweise auch in der Serienfertigung, angewendet werden können, ohne dabei extrem teuer zu werden.

Ein weiterer Vorteil der Erfindung bzw. einer bevorzugten Ausgestaltung der Erfindung besteht darin, dass sich neben komplexen Außenkonturen auch innere Hohlstrukturierungen aufbauen lassen.

Im Folgenden soll beispielhaft anhand der Figuren erläutert werden, wie ein erfindungsgemäßes Verfahren ausgebildet sein kann bzw. sich ein erfindungsgemäßer beispielhafter Gegenstand herstellen lässt, wobei dadurch die Erfindung allerdings nicht beschränkt sein soll. Es zeigt:
- Fig. 1: die beispielhaften Schritte eines beispielhaften erfindungsgemäßen Verfahrens;
- Fig. 2: einen beispielhaften Aufbauprozess für einen beispielhaften erfindungsgemäßen Gegenstand bzw. zur Durchführung eines beispielhaften erfindungsgemäßen Verfahrens; und
- Fig. 3: beispielhafte Musterbauteile.

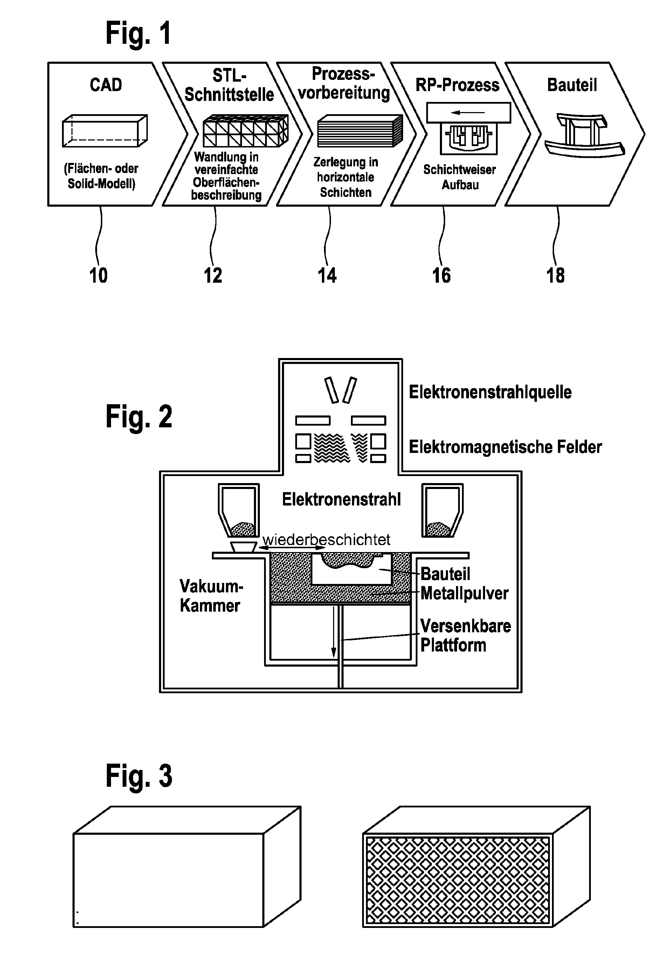

Fig. 1 zeigt einen beispielhaften Ablauf eines beispielhaften erfindungsgemäßen Verfahrens, mit dem sich beispielsweise ein als Blisk gestalteter Turbinen-Rotor herstellen lässt. Zunächst wird im Schritt 10 ein Flächen- oder Solid-Modell mittels CAD bereitgestellt.

Anschließend wird das Modell in eine vereinfachte Oberflächenbeschreibung gewandelt (Schritt 12). Im Schritt 14 wird der Prozess vorbereitet, wobei hierzu insbesondere die Oberflächenbeschreibung bzw. das Modell in horizontale Schichten zerlegt wird. Im Schritt 16 wird ein RP-Prozess durchgeführt bzw. erfolgt ein schichtweiser Aufbau. Anschließend ist das Bauteil bzw. die Turbinen-Blisk fertiggestellt (Schritt 18). Bei diesem anhand der Fig. 1 erläuterten generativen Fertigungsverfahren ("Rapid-Prototyping") lässt sich also beispielsweise ein erfindungsgemäßes bevorzugtes Bauteil herstellen.

Fig. 2 zeigt einen beispielhaften Aufbauprozess eines sogenannten "Electrobeam Melting" (Firma Arcam).

Fig. 3 zeigt Musterbauteile in schematischer Darstellung, wobei dort links eine kompakte Materialstruktur und rechts eine generativ herzustellende Hohlbaustruktur dargestellt ist.

## Patentansprüche

1. Verfahren zur Herstellung eines Turbinenrotors, insbesondere zur Herstellung eines Hochdruckturbinen-Rotors, wobei dieser Turbinenrotor als Blisk (d.h. bladed disk) gestaltet ist und eine radial innen angeordnete Scheibe sowie mehrere von dieser Scheibe abragende Schaufeln bzw. Schaufelblätter ausbildet, wobei der Turbinenrotor für eine Luftkühlung ein inneres Kanalsystem aufweist, wobei
zumindest ein Abschnitt dieses Turbinenrotors durch ein generatives Herstellungsverfahren erzeugt wird, **dadurch gekennzeichnet, dass** die Scheibe der Blisk integrierte Radialverdichterstrukturen aufweist.

2. Verfahren nach Anspruch 1, **dadurch gekennzeichnet, dass** die Scheibe und / oder die Schaufeln bzw. Schaufelblätter durch ein generatives Herstellungsverfahren erzeugt werden.

3. Verfahren nach Anspruch 2, **dadurch gekennzeichnet, dass** sämtliche Schaufeln bzw. Schaufelblätter durch ein generatives Herstellungsverfahren erzeugt werden.

4. Verfahren nach einem der vorangehenden Ansprüche, **dadurch gekennzeichnet, dass** der Turbinenrotor unter Verwendung eines CAD-Modells vollständig oder bereichsweise durch ein generatives Herstellungsverfahren erzeugt wird.

5. Verfahren nach einem der vorangehenden Ansprüche, **dadurch gekennzeichnet, dass** der Turbinenrotor vollständig oder bereichsweise generativ aus einem Pulverbett aufgebaut wird.

6. Verfahren nach Anspruch 5, **dadurch gekennzeichnet, dass** beim vollständigen oder bereichsweisen generativen Erzeugen des Turbinenrotors aus einem Pulverbett das Pulver in den Bereichen, in denen innere Kanäle des Turbinenrotors erzeugt werden sollen, nicht verfestigt wird, wobei dieses nicht-verfestigte Pulver anschließend ausgeblasen wird.

7. Verfahren nach einem der Ansprüche 1 bis 4, **dadurch gekennzeichnet, dass** für das generativen Erzeugen des Turbinenrotors Material zugeführt wird, wobei die Bereiche, in denen innere Kanäle des Turbinenrotors erzeugt werden sollen, gemäß einem CAD-Modell frei von solchem Material bleiben.

8. Turbinenrotor, insbesondere Hochdruckturbinen-Rotor, wobei dieser Turbinenrotor als Blisk (d.h. bladed disk) gestaltet ist und eine radial innen angeordnete Scheibe sowie von dieser Scheibe abstehende Schaufeln bzw. Schaufelblätter ausbildet, wobei die Scheibe und / oder Schaufeln bzw. Schaufelblätter für eine Luftkühlung ein inneres Kanalsystem aufweisen, und wobei zumindest ein Abschnitt dieses Turbinenrotors durch ein generatives Herstellungsverfahren hergestellt ist, und zwar insbesondere durch ein generatives Herstellungsverfahren gemäß einem der vorangehenden Ansprüche, **dadurch gekennzeichnet, dass** die Scheibe der Blisk integrierte Radialverdichterstrukturen aufweist.
